# FASCICULE DE BREVET EUROPEEN

(11) **EP 1 494 888 B1**
(45) Date de publication et mention de la délivrance du brevet: **22.02.2012**
(21) Numéro de dépôt: 03746344.5
(22) Date de dépôt: 14.04.2003
(51) Int. Cl.: B60L 5/20

(54) **ELEMENT DE CONTACT ELECTRIQUE FROTTANT EN MATERIAU CARBONE COMPORTANT AU MOINS UNE BANDE ET UNE GAINE**
AUS KOHLENSTOFFMATERIAL BESTEHENDES UND MINDESTENS EIN BAND UND EINE HÜLLE UMFASSENDES ELEKTRISCHES SCHIEBEKONTAKTELEMENT
ELECTRICAL SLIDING CONTACT ELEMENT CONSISTING OF CARBON MATERIAL AND COMPRISING AT LEAST ONE STRIP AND ONE SHEATH

(30) Priorité: 16.04.2002 FR 0204741
(43) Date de publication de la demande: 12.01.2005
(73) Titulaire: Mersen France Amiens SAS, 80080 Amiens (FR)
(72) Inventeur: BRUNEAU, Jean-Louis, F-95150 Taverny (FR); BRAUD, Pascal, F-80800 Corbie (FR); HEUSSE, Sébastien, F-80110 Thennes (FR)
(74) Mandataire: Largeau, Béatrice
(86) Numéro de dépôt international: PCT/FR2003/001180
(87) Numéro de publication internationale: WO 2003/086808

(56) Documents cités:
- DE-A- 4 024 021
- DE-B- 1 006 455
- FR-A- 1 023 126
- SU-A- 1 572 847
- US-A- 5 657 842

## Description

### Domaine de l'invention

La présente invention concerne les dispositifs de contact frottant, tels que les pantographes, les perches (notamment de trolley), les frotteurs de troisième rail ou les frotteurs industriels, qui sont utilisés pour le captage de courant électrique depuis un conducteur électrique fixe, tel qu'une caténaire ou un troisième rail, vers un véhicule, tel qu'un véhicule ferroviaire, un trolley-bus ou une rame de métro, qui peut être à l'arrêt ou en mouvement L'invention concerne plus particulièrement l'élément frotteur (ou "bande frottante") des dispositifs de contact frottant.

### Etat de la technique

Les dispositifs de contact frottant, tels que les pantographes utilisés sur les matériels ferroviaires, comprennent typiquement un dispositif de soutien mobile et une bande frottante (ou "bande frottante"). Le dispositif de soutien supporte la bande frottante et permet de la mettre en contact avec un conducteur électrique fixe, tel qu'une caténaire (qui est en général un fil de cuivre dopé) ou un troisième rail, assurant ainsi le transfert de courant du conducteur fixe vers le véhicule en mouvement ou à l'arrêt. Dans le cas des pantographes, la bande frottante comprend l'élément frotteur du pantographe.

Les bandes frottantes sont considérées comme des produits d'usure remplaçables qui doivent posséder une série de propriétés d'usage. En particulier, et avant tout, les bandes frottantes doivent bien conduire le courant, c'est-à-dire qu'elles doivent présenter une faible résistance électrique, de manière à réduire les pertes d'énergie et les échauffements. En outre, les bandes frottantes doivent présenter des propriétés de frottement contre le conducteur fixe convenables, c'est-à-dire qui évitent une usure rapide aussi bien de la bande frottante que du conducteur fixe. II est en particulier requis d'éviter tout grippage et toute abrasion du conducteur fixe. De plus, dans le cas des pantographes, les bandes frottantes doivent être légères afin de minimiser l'inertie mécanique du dispositif de captage de courant, ce qui permet notamment de réduire l'amplitude des mouvements verticaux du pantographe lorsque le véhicule est en mouvement et d'éviter l'ouverture du contact entre l'élément frotteur et la caténaire qui peut créer des arcs électriques. D'autre part, les bandes frottantes doivent pouvoir résister à l'usure et à l'abrasion causées par les arcs électriques inévitables qui se développent entre le conducteur fixe et l'élément frotteur. De surcroît, dans le cas des pantographes, les bandes frottantes doivent présenter une grande résistance aux chocs mécaniques contre la caténaire car un bris de la bande frotteuse peut conduire à des avaries importantes du système de captage ou de la caténaire même. Elles doivent également résister à des températures pouvant éventuellement atteindre 300° à 400°C dans les applications les plus sévères. Enfin, les bandes frottantes doivent être faciles à monter et à remplacer.

Il est connu d'utiliser des bandes frottantes essentiellement métalliques munies de moyens pour améliorer les propriétés de friction et, éventuellement, de moyens pour augmenter la conductivité. Par exemple, il est connu d'utiliser des bandes en fer accompagnées d'un dispositif de lubrification, des bandes en fer fritté poreux incorporant des additifs (tels que des composés intermétalliques et du plomb) pour améliorer les propriétés de friction et ajouts de cuivre pour augmenter la conductivité, des bandes de cuivre fritté poreux incorporant des additifs (tels que des composés intermétalliques et du plomb) destinés à obtenir des propriétés de friction satisfaisantes, et des bandes en aluminium renforcé de fibres (telles que des fibres d'alumine) qui lui confèrent des propriétés de friction satisfaisantes. Ces bandes frottantes présentent toutefois une mauvaise résistance à l'abrasion causée par les arcs électriques, une usure du conducteur fixe appréciable et, sauf dans le cas des bandes en aluminium, un poids élevé.

II est également connu d'utiliser des bandes frottantes comprenant une bande d'usure à base de carbone amorphe éventuellement imprégné de cuivre ou d'alliage de cuivre afin d'augmenter la conductivité électrique, et une bande métallique support pour assurer les fonctions mécaniques, car les bandes en carbone sont généralement trop fragiles pour être utilisées seules. Les coûts de production de ces bandes mixtes sont aussi généralement plus élevés que ceux des bandes essentiellement métalliques.

Un avantage important des bandes métalliques est d'éviter un échauffement excessif du conducteur fixe (notamment de la caténaire dans le cas de pantographes) lors du captage à l'arrêt et donc d'éviter toute fragilisation de celui-ci sous l'effet d'un recuit. Toutefois, les bandes métalliques ont pour inconvénient majeur de dégrader les conducteurs fixes sous l'effet de l'abrasion beaucoup plus rapidement que les bandes carbonées (typiquement trois fois plus rapidement dans le cas des caténaires).

L'inconvénient majeur des bandes carbonées, même imprégnées de métal, est de générer un échauffement important du conducteur fixe (notamment de la caténaire dans la cas des pantographes) lors du captage à l'arrêt. Si la température est supérieure à environ 110°C, cet échauffement peut entraîner un recuit du conducteur fixe qui le fragilise.

La demanderesse a donc recherché des bandes en matériau carboné aptes à être utilisées notamment dans les applications de captage dites de basse tension (BT), pour lesquelles les intensités de courant sont très élevées. Elle a notamment recherché des bandes frottantes légères, de grande longévité, de conductivité élevée, de faible agressivité vis-à-vis du conducteur fixe et qui permettent de réduire significativement les coûts d'exploitation des installations utilisant des dispositifs de contact frottant. Elles a également recherché des bandes frottantes qui possèdent une grande résistance à l'abrasion vis à vis de caténaires dégradées (du fait notamment de l'utilisation de bandes métalliques) et qui ne provoquent pas d'échauffement excessif de la caténaire lors du captage à l'arrêt.

### Description de l'invention

L'invention a pour objet une bande frottante destinée à la captation de courant depuis un conducteur fixe, tel qu'un troisième rail au sol, un conducteur aérien ou une caténaire, vers un véhicule en mouvement, par l'intermédiaire d'un dispositif de contact frottant, tel qu'un pantographe.

La bande frottante selon l'invention comprend une bande d'usure contenant un matériau carboné et ayant une surface de contact destinée à être mise en contact électrique avec un conducteur fixe, et est caractérisé en ce que la bande d'usure comprend au moins une bande de contact, qui contient de préférence du carbone partiellement amorphe, et au moins une gaine, qui contient typiquement du graphite ou un matériau graphité ou graphitisé, ayant une conductivité thermique supérieure ou égale à 80 W/m.K, et en ce que la bande de contact forme tout ou partie de ladite surface de contact, de manière à pouvoir assurer tout ou partie du contact électrique avec le conducteur fixe.

Plutôt que de rechercher un seul matériau ayant toutes les propriétés requises, la demanderesse a eu l'idée d'utiliser deux éléments distincts accolés, à savoir une bande de contact et une gaine, contenant chacune des matériaux carbonés différents, le premier étant résistant à l'abrasion et le deuxième ayant une grande conductivité thermique.

Plus précisément, la bande de contact, qui est typiquement un insert, assure la résistance à l'abrasion lors du fonctionnement en dynamique, c'est-à-dire lorsque la bande frottante est en contact avec un conducteur fixe et en mouvement par rapport à celui-ci. La bande de contact a de préférence une dureté Shore C2 supérieure à environ 80, et de préférence encore supérieure à environ 85.

La gaine, dont la conductivité thermique est élevée, assure une évacuation rapide de l'énergie thermique produite en fonctionnement et limite ainsi l'échauffement du conducteur fixe, tout particulièrement lors du captage à l'arrêt, c'est-à-dire lorsque la bande frottante est en contact avec un conducteur fixe mais sans mouvement par rapport à celui-ci. La dureté Shore C2 de la gaine est typiquement inférieure à environ 70.

De préférence, la (ou chaque) bande de contact affleure à la surface de la bande frottante, de façon à former une surface de contact uniforme. La (ou chaque) bande de contact peut éventuellement émerger - typiquement de l'ordre d'un millimètre - au dessus de la surface de la bande frottante. La partie de la (ou les) bande(s) de contact qui affleure ou émerge à la surface de la bande frottante peut être plane ou avoir une surface convexe. La (ou chaque) bande de contact est de préférence formée d'une seule pièce afin de mieux diffuser la chaleur vers ses extrémités et d'éviter un échauffement important de sa partie en contact avec le conducteur fixe.

Dans le cas des pantographes, la bande de contact est typiquement une bande longitudinale et la gaine est typiquement une bande munie d'une gorge longitudinale dans laquelle est insérée la bande de contact ou deux bandes latérales flanquant la bande de contact.

De préférence, l'interface (ou surface de jonction) entre la gaine et chaque bande de contact est telle que la résistance de contact thermique est le plus faible possible, de manière à assurer une évacuation rapide de l'énergie thermique produite dans la bande de contact.

Dans un mode de réalisation préféré de l'invention, la bande de contact contient du carbone partiellement amorphe et la gaine contient un matériau graphité, c'est-à-dire un matériau contenant du graphite ou un électrographite.

Les bandes frottantes selon l'invention permettent de réduire les coûts d'exploitation (tels que les coûts de maintenance des caténaires) notamment en raison d'une faible température au captage à l'arrêt.

L'invention a également pour objets les dispositifs de contact frottant, tels que les pantographes, les perches de trolley, les frotteurs de troisième rail ou les frotteurs industriels, comprenant au moins une bande frottante selon l'invention.
La figure 1 représente, en section transversale par rapport au sens long de la bande, une bande frottante de pantographe typique de l'art antérieur en contact avec une caténaire.
La figure 2 représente, en section transversale par rapport au sens long de la bande, une bande frottante typique de l'art antérieur munie de moyens de détection d'avaries et/ou d'usure.
La figure 3 représente, en section transversale par rapport au sens long de la bande, une bande frottante typique de l'art antérieur munie de moyens de raccordement électrique.
La figure 4 représente, vue de côté (a) et vue du dessous (b), une bande frottante typique de l'art antérieur munie d'un support-renfort qui couvre la longueur de la bande frottante.
La figure 5 représente, en coupe longitudinale, des moyens de fixation sur le pantographe de la bande frottante selon l'invention.
La figure 6 illustre, de manière schématique, trois modes de réalisations d'une bande frottante selon l'invention.
La figure 7 illustre, de manière schématique et en coupe transversale, différentes variantes de la bande d'usure de la bande frottante selon l'invention.
La figure 8 illustre, de manière schématique et en coupe transversale, une variante de la bande d'usure de la bande frottante selon l'invention.

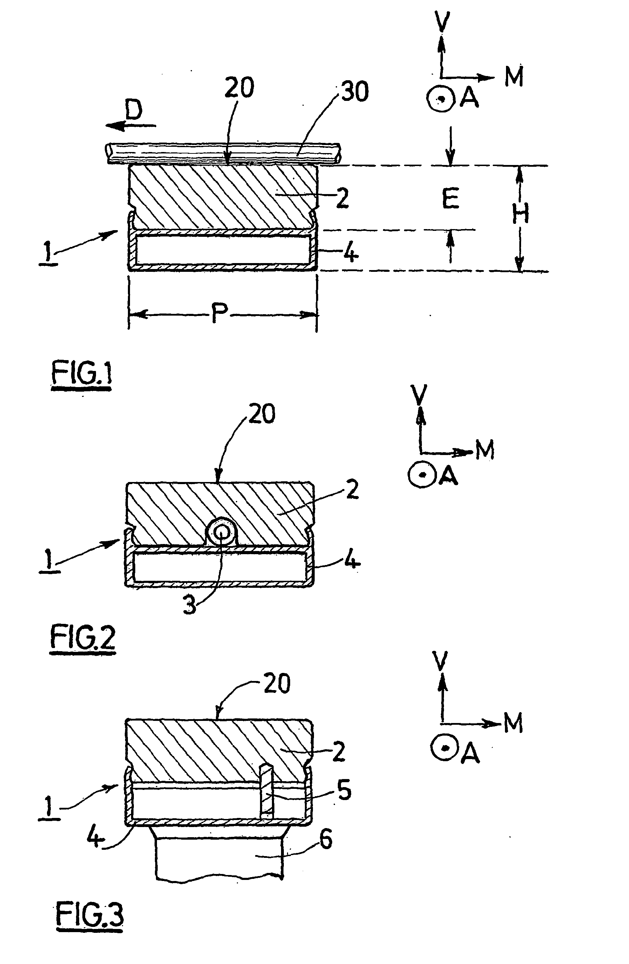

Tel qu'illustré à la figure 1, une bande frottante (1) de pantographe typique de l'art antérieur comprend une bande d'usure (2) et un support-renfort (4). Le support-renfort (4) améliore la tenue mécanique de la bande d'usure (2) lorsque celle-ci est à base de carbone amorphe, et permet en outre de fixer la bande frottante sur le pantographe.

La bande frottante (1) est destinée à être mise en contact avec un conducteur fixe (30), typiquement une caténaire, par l'intermédiaire de la bande d'usure (2). La surface de contact (20) entre la bande d'usure (2) et le conducteur fixe (30) est typiquement plane.

Dans le cas des bandes de pantographes, la bande frottante (1) a typiquement une forme allongée. Ses dimensions typiques sont : longueur L de l'ordre de 1 m, hauteur H de l'ordre de 5 cm et largeur P de l'ordre de 5 cm. L'épaisseur de la bande d'usure (2) est typiquement de l'ordre de 20 à 30 mm dans sa partie la plus épaisse.

La longueur L du support-renfort (4) de la bande frottante (1) est typiquement égale ou supérieure à la longueur L' de la bande d'usure (2).

En utilisation, le déplacement du conducteur fixe (30) par rapport à la bande frottante (1) est tel que la surface de contact (20) est sensiblement parallèle à la direction D de se déplacement. Dans les figures, la direction du déplacement de la bande frottante (1) est désigné par la flèche M. La direction V est normalement perpendiculaire à la direction du déplacement. La direction V est typiquement verticale dans le cas des pantographes.

Selon l'invention, la bande frottante (1) pour la captation de courant électrique comprend une bande d'usure (2) contenant un matériau carboné et ayant une surface de contact (20) destinée à être mise en contact électrique avec un conducteur fixe (30), et est caractérisée en ce que la bande d'usure (2) comprend au moins une bande de contact (ou insert) (22, 22a, 22b) contenant un premier matériau carboné apte à résister à l'abrasion, dont la dureté Shore C2 est de préférence supérieure ou égale à 80, et une gaine (21, 21a, 21b) contenant un deuxième matériau carboné de conductivité thermique supérieure ou égale à 80 W/m.K, de préférence supérieure ou égale à 100 W/m.K, et de préférence encore comprise entre 100 et 400 W/m.K, et en ce qu'une partie (24, 24a, 24b) de la surface de la bande de contact (22, 22a, 22b) forme tout ou partie de ladite surface de contact (20).

La dureté Shore C2 est mesurée selon la section 302 (Méthode de rebondissement) de la norme CEI (Commission Electrotechnique Internationale) n° 60413 de janvier 1972, intitulée « Méthodes d'essai pour la mesure des propriétés physiques des matières de balais pour machines électriques ». La mesure de la dureté est effectuée par rebondissement d'un marteau muni d'un cône tronqué ou d'une pointe émoussée lancé d'une hauteur déterminée.

Ledit premier matériau carboné est de préférence un carbone partiellement amorphe. L'expression « carbone partiellement amorphe » s'entend de tout matériau carboné contenant typiquement du noir de carbone, du coke, une faible proportion de graphite (typiquement moins de 30 % en poids) et un liant carbonisé. Ce matériau est obtenu à partir d'un mélange comprenant typiquement entre 10 % et 70 % en poids de noir de carbone (typiquement 50 %), entre 1 % et 50 % en poids de coke (typiquement 40 %), entre 1 % et 30 % en poids de graphite (typiquement 10 %), entre 10 et 30 % en poids de liant (généralement un brai) et, avantageusement, entre 1 % et 5 % en poids d'un additif aromatisant (tel que du soufre). Ledit carbone partiellement amorphe peut être tout carbone amorphe déjà utilisé dans les applications électriques, notamment dans les bandes frottantes de pantographe connues. La conductivité thermique de ces matériaux est typiquement inférieure à 20 W/m.K.

La résistivité électrique dudit premier matériau carboné est de préférence inférieure à environ 100 µΩ.m, et de préférence encore inférieure à environ 50 µΩ.m. La résistance à la rupture en flexion (mesure en 3 points) dudit premier matériau carboné est de préférence supérieure à 40 MPa. Le taux d'usure par abrasion dudit premier matériau carboné est de préférence inférieur à 1 mm pour 10 mn selon le protocole de mesure suivant : meule à grains de 100, pression de 4,5 kg, vitesse de 130 km/h et largeur des éprouvettes de 40 mm.

Ledit premier matériau carboné a typiquement une structure granulaire. De préférence, le premier matériau carboné, notamment le carbone partiellement amorphe, a une granulométrie grossière, c'est-à-dire qu'il comprend des grains de taille supérieure à 100 µm (typiquement au moins 80 %, et de préférence encore 90 %, en poids des grains ont une taille comprise entre 100 et 1 000 µm). Typiquement, 90 %, voire 95 %, en poids des grains ont une taille comprise entre 0,1 et 1 000 µm.

Ledit deuxième matériau carboné est avantageusement un matériau carboné graphité (tel qu'un matériau carboné contenant du graphite naturel ou artificiel ou un électrographite (typiquement polycristallin) ou un composite C/C graphité), dont la conductivité thermique est supérieure ou égale à 80 W/m.K, et de préférence comprise entre 100 et 400 W/m.K. Le matériau graphité est de préférence anisotrope, avec une orientation de l'anisotropie telle que la conductivité thermique du matériau est la plus élevée dans la direction perpendiculaire à la surface de contact. Le coefficient d'anisotropie est de préférence supérieur à 1,1, et de préférence encore supérieur à 1,2. La dureté Shore C2 du deuxième matériau carboné est typiquement inférieure à 70 environ.

Dans un mode de réalisation avantageux de l'invention, ledit deuxième matériau carboné comprend au moins 10 % en poids de graphite naturel ou artificiel (typiquement de 10 à 99 % en poids, de préférence entre 35 et 99 % en poids, et de préférence encore entre 60 et 99 % en poids). Le taux de graphitisation du graphite artificiel est typiquement compris entre 0,2 et 0,6.

Dans un autre mode de réalisation avantageux de l'invention, ledit deuxième matériau carboné comprend un électrographite dont la conductivité thermique est supérieure à 80 W/m.K (de préférence comprise entre 100 et 400 W /m.K).

Ledit deuxième matériau carboné a typiquement une structure granulaire. De préférence, le deuxième matériau carboné, notamment lorsqu'il est formé d'un matériau graphité, c'est-à-dire lorsqu'il est formé d'un matériau contenant du graphite ou un électrographite, a une granulométrie fine, c'est-à-dire qu'il comprend des grains de taille inférieure à 100 µm (typiquement, au moins 90 %, et de préférence au moins 95 %, en poids des grains ont une taille inférieure à 100 µm, voire inférieure à 50 µm).

La résistivité électrique dudit deuxième matériau carboné est de préférence inférieure à 2,5 µΩ.m.

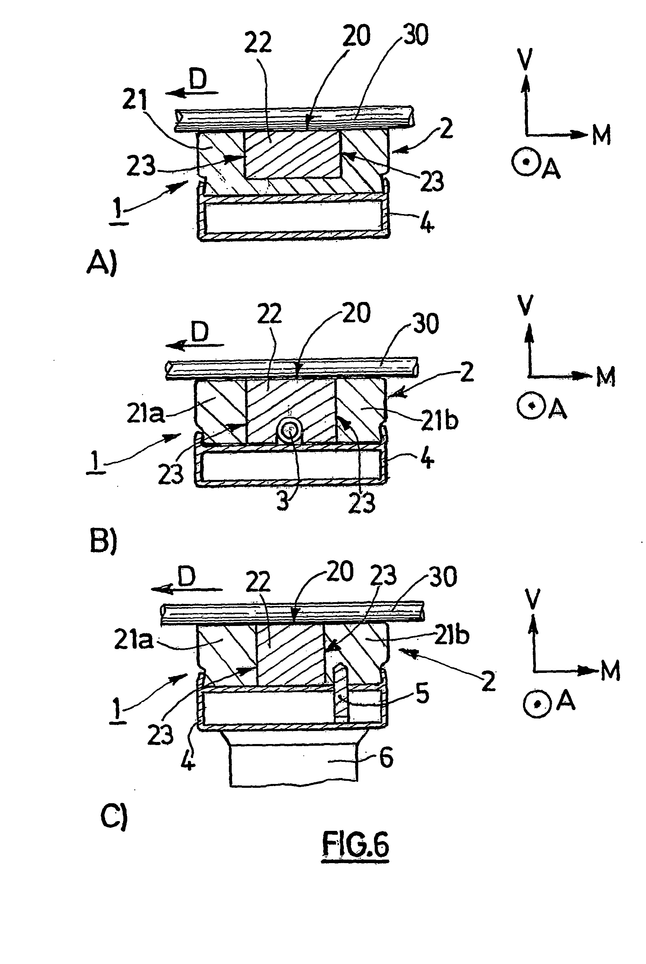

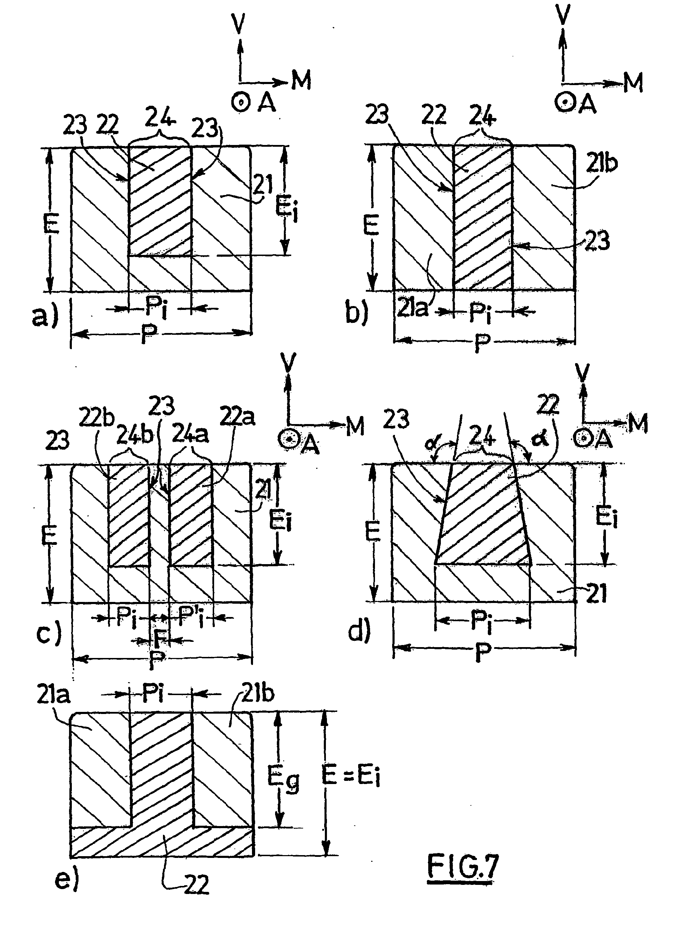

La gaine (21, 21a, 21 b) et la bande de contact (22, 22a, 22b) de la bande frottante (1) selon l'invention peuvent prendre différentes formes. Elles peuvent en particulier prendre les formes illustrées aux figures 6 et 7.

La bande de contact (22, 22a, 22b) possède avantageusement une section simple, telle qu'une section transversale de forme rectangulaire, ce qui simplifie le procédé de fabrication de la bande frottante. La bande de contact (22, 22a, 22b) selon l'invention est typiquement une pièce insérée dans la gaine (c'est-à-dire un insert).

La bande frottante selon l'invention comprend de préférence une seule bande de contact (22, 22a, 22b) ou deux bandes de contact (22, 22a, 22b) sensiblement parallèles (tel qu'illustré à la figure 7c). Les essais ont montré qu'un nombre de bandes de contact plus élevé conduisait à une augmentation du taux d'usure.

L'interface (23) entre la gaine (21, 21a, 21b) et chaque bande de contact (22, 22a, 22b) est typiquement sensiblement perpendiculaire à la direction M du mouvement de la bande frottante. Dans le cas des pantographes, l'interface (23) est sensiblement parallèle à l'axe principal A de la bande d'usure (2) (ou à la tangente longitudinale A' lorsque la bande d'usure (2) est incurvée). Cette interface (23) peut avoir un angle α différent de 90° par rapport à la surface de contact (20), tel qu'illustré à la figure 7d. Cette dernière variante permet d'assurer une meilleure tenue de la bande de contact dans la gaine (dans ce but, l'angle α est de préférence compris entre 92° et 100°). Dans ce cas, la largeur Pi de chaque bande de contact (22, 22a, 22b) correspond à la largeur moyenne sur toute l'épaisseur Ei de celle-ci.

L'épaisseur Ei de la (ou des) bande(s) de contact (22, 22a, 22b) est typiquement au moins égale à 60 % de l'épaisseur E de la bande d'usure (2). L'épaisseur Ei peut être égale à celle de la bande d'usure (2), c'est-à-dire 100 % ; dans ce cas, la gaine comprend deux parties séparées (21a, 21b) (figures 6c et 7b). L'épaisseur Ei peut éventuellement être plus grande que l'épaisseur Eg de la gaine (figure 7e), mais cette variante est moins économique.

La largeur Pi, Pi' de la (ou des) bande(s) de contact (22, 22a, 22b) est typiquement comprise entre 5 et 55 mm, et plus typiquement entre 30 et 55 mm, selon le type de bande. Elle représente une fraction de la largeur totale P de la bande d'usure typiquement comprise entre 10 et 95 %, et de préférence comprise entre 40 et 92 %, et de préférence encore comprise entre 45 et 60 %.

La surface de contact (24, 24a, 24b) totale de la ou des bandes de contact peut représenter jusqu'à 90 % de la surface de contact (20) de la bande d'usure (cette fraction est typiquement comprise entre 2 à 90 %, et de préférence comprise entre 40 et 85 %). Une surface de contact (24, 24a, 24b) supérieure à 90 % environ conduit à une mauvaise évacuation de la chaleur par la gaine (21, 21a, 21b). Une surface de contact (24, 24a, 24b) inférieure à 2 % environ entraîne une usure trop rapide de la bande frottante. Lorsque la bande d'usure comprend plus d'une bande de contact, la surface de contact totale de la bande de contact est donnée par la somme des surfaces de contact (24a, 24b) de chaque bande de contact.

Lorsque la bande de contact (22, 22a, 22b) est de forme rectangulaire, la gaine (21, 21a, 21b) recouvre de préférence au moins les deux faces (23) qui sont sensiblement perpendiculaires à la surface de contact (20). Il est possible, mais moins avantageux, d'utiliser une gaine qui ne couvre qu'une face de la bande de contact.

La longueur Li de la bande de contact (22, 22a, 22b) est typiquement sensiblement égale à celle L' de la bande d'usure. La bande de contact (22, 22a, 22b) et la gaine (21, 21a, 21b) sont typiquement de la même longueur. La bande de contact est typiquement constituée d'une seule pièce, ce qui permet notamment de simplifier le procédé de fabrication.

La surface de contact (20) de la bande d'usure (2) peut être incurvée dans la direction longitudinale (c'est-à-dire que l'orientation de la tangente A' varie le long de la bande d'usure). L'incurvation est typiquement convexe dans le cas des bandes de pantographes. L'épaisseur E de la bande d'usure (2) peut également varier le long de celle-ci. Dans le cas des pantographes, la bande d'usure (2) est typiquement plus mince à ses extrémités.

Tel qu'illustré à la figure 6, la bande frottante (1) selon l'invention est de préférence orientée par rapport au conducteur fixe (30) de manière à ce que le déplacement principal dudit conducteur, qui est représenté par la flèche D, est approximativement perpendiculaire à l'axe principal A de la bande d'usure (2).

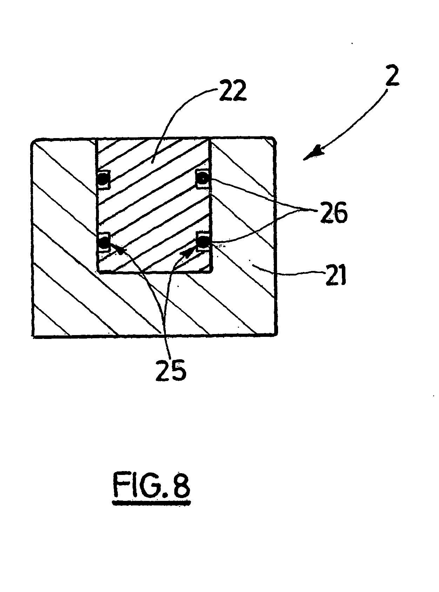

La bande d'usure (2) selon l'invention peut en outre comprendre des moyens pour augmenter les conductivités thermique et électrique à l'interface (23) entre la gaine et la (ou chaque) bande de contact. Ces moyens peuvent être, par exemple, des éléments de joint métallique (26) (tel que des tresses métalliques contenant typiquement du cuivre), qui sont typiquement insérés dans des gorges (25) aménagées dans la bande de contact, tel qu'illustré à la figure 8.

La bande de contact (22, 22a, 22b) peut être obtenue par les procédés connus pour la fabrication de bandes d'usure en carbone partiellement amorphe de l'art antérieur. La bande de contact est avantageusement obtenue par un procédé comprenant :
- la mise en forme, typiquement par filage ou pressage d'un mélange comprenant ledit premier matériau carboné, de manière à obtenir une bande crue ;
- la cuisson de ladite bande à une température d'au moins 180°C (typiquement 1000 °C);
- optionnellement, une opération d'imprégnation de la bande par un métal (tel que du cuivre).

La gaine (21, 21a, 21b) peut être obtenue suivant différentes techniques. En particulier, la gaine peut être obtenue par un procédé comprenant :
- la mise en forme, typiquement par compression, d'un mélange contenant le matériau carboné de base (c'est-à-dire ledit deuxième matériau carboné tel que du graphite naturel ou artificiel ou un électrographite), de manière obtenir une préforme crue ;
- une opération de cokéfaction ou de graphitisation de la préforme crue;
- optionnellement, une opération d'imprégnation de la gaine par un métal (tel que du cuivre) ;
- une opération d'usinage d'une ou plusieurs gorges apte à loger la ou les bandes de contact.

La bande d'usure (2) finale peut être obtenue par introduction d'une bande de contact dans chaque gorge de la gaine, typiquement par introduction à force.

Le procédé de fabrication de la bande d'usure peut optionnellement comprendre une opération d'imprégnation de la bande par un métal (tel que du cuivre) afin d'améliorer le contact thermique entre la bande de contact et la gaine.

Ledit mélange comprend typiquement le matériau carboné de base et un liant organique ou carboné, tel qu'une résine.

La gaine (21, 21a, 21b) peut également être obtenue à partir d'un composite carbone/carbone (C/C) graphitisé (typiquement par un traitement thermique à une température supérieure ou égale à 2 000 °C. Dans ce cas, ledit mélange contient également un matériau de renfort, tel que des fibres ou des tissus organiques ou carbonées.

L'opération de cokéfaction est effectuée de manière à obtenir un taux massique de graphite compris entre 20 et 95 %.

Les porosités de la gaine (21, 21a, 21b) peuvent éventuellement être enduites de produits carbonés. Cette enduction a pour avantage de renforcer mécaniquement la gaine. Dans ce but, le procédé de fabrication peut comprendre une opération supplémentaire dite de densification. Cette opération comprend typiquement une imprégnation de la bande d'un liquide riche en carbone (tel qu'un brai, un polymère, un goudron, une huile ou une résine phénolique) et une cokéfaction de ce liquide pour laisser un renfort carboné au sein de la porosité, l'opération étant répétée autant de fois que nécessaire (typiquement 1 ou 3 fois). Alternativement, ladite opération peut comprendre l'infiltration, dans les pores de la gaine, d'un gaz riche en carbone dans des conditions thermodynamiques favorisant le craquage du gaz, laissant un dépôt de pyrocarbone au sein de ladite porosité. Ces deux techniques peuvent éventuellement être combinées.

Selon une variante avantageuse du procédé de fabrication, on effectue en outre un opération de collage ou de scellement des bandes de contact dans les cavités. Cette opération peut comprendre l'introduction d'un élément de joint métallique pour améliorer les conductivités thermique et électrique de l'interface entre la gaine et la bande de contact.

La gaine et/ou la bande de contact peuvent éventuellement contenir une part de métal dans les pores desdits matériaux carbonés. Ledit métal est typiquement du cuivre ou un alliage contenant du cuivre (tel qu'un laiton ou un bronze), de l'aluminium ou un alliage d'aluminium ou du magnésium ou un alliage de magnésium. La part de métal contenu dans la gaine et/ou la (ou chaque) bande de contact est typiquement comprise entre 10 et 50 % en poids, selon la nature du métal. Pour le cuivre et ses alliages, la part de métal est typiquement comprise entre 15 et 40 % en poids. Cette variante de l'invention est avantageuse dans les applications, dites de basse tension (BT), dans lesquelles la tension est inférieure à 3 kV environ. Dans ces applications, les courants sont de très forte intensité et nécessitent par conséquent une très grande conductibilité électrique de la bande frottante. L'imprégnation de métal n'est généralement pas nécessaire dans les applications, dites de haute tension, dans lesquelles la tension est typiquement supérieure à 10 kV.

Ledit métal est typiquement introduit dans lesdits pores par imprégnation. L'imprégnation du métal peut être obtenue par infiltration de métal liquide dans la porosité résiduelle des différents matériaux, c'est-à-dire la porosité restant ouverte, et par solidification du métal infiltré. L'infiltration est généralement effectuée en autoclave, à des pressions importantes (typiquement de 20 à 200 bars) afin d'assurer une bonne infiltration du métal liquide dans les porosités.

Si nécessaire, la bande d'usure peut, après une éventuelle imprégnation métallique, être également imprégnée d'un produit fluide, tel qu'un polymère (qui permet notamment d'augmenter ses caractéristiques mécaniques après polymérisation) ou un composé organique cokéfié ou non (tel qu'un brai, un goudron, qui permettent notamment de renforcer la structure). Un produit de finition peut être envisagé pour remplir la porosité résiduelle ou une partie de la porosité résiduelle afin de limiter le frottement ou de rendre hydrophobe l'ensemble de manière à le rendre résistant au gel.

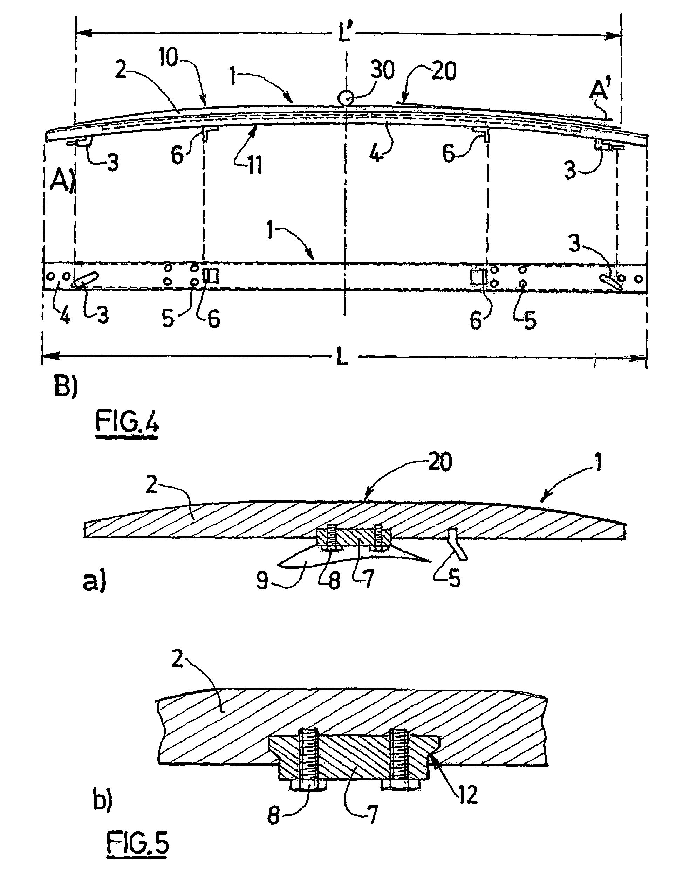

La bande frottante (1) selon l'invention comprend typiquement un support (4) muni de moyens de fixation (6) permettant de fixer la bande sur un dispositif de contact frottant. Etant données les caractéristiques mécaniques de la bande d'usure (2) selon l'invention, celle-ci peut être autoporteuse, c'est-à-dire que la bande frottante (1) ne comprend pas de support-renfort (4), ce qui permet de simplifier et d'alléger les dispositifs de captage. Dans le cas des pantographes, la bande frottante selon l'invention peut alors être fixée directement au pantographe (9) ou, comme le montre la figure 5, elle peut être fixée au pantographe (9) à l'aide de moyens de fixation (7, 8, 12), tels qu'un plot de fixation (7), des vis ou boulons (8). Tel qu'illustré à la figure 5b), les moyens de fixation peuvent comprendre un emboîtement de type queue d'aronde (12) qui permet de faire coopérer la bande d'usure (2) et le plot de fixation (7).

La bande frottante (1) selon l'invention peut comprendre des moyens (3) pour détecter les avaries et/ou l'usure de la bande d'usure. Elle peut également comprendre des moyens de raccordement électriques (5, 6), tels qu'un câble électrique (5) scellé dans la bande d'usure (2) ou une patte métallique (6).

La bande frottante selon l'invention est avantageusement utilisée dans les dispositifs de contact frottant, tels que les pantographes, les perches de trolley, les frotteurs de troisième rail et les frotteurs industriels.

Les bandes frottantes selon l'invention permettent de réduire sensiblement la masse du pantographe, notamment lorsque la gaine comprend un composite C/C, ce qui évite de pousser fortement le pantographe sur le conducteur fixe.

### Essais comparatifs

Plusieurs bandes frottantes en carbone partiellement amorphe gainées de matériaux électrographitiques et imprégnées de cuivre selon l'invention ont été fabriquées et mises à l'essai afin de comparer leurs propriétés à celles des bandes frottantes en matériau imprégné de cuivre de l'art antérieur.

Le tableau I donne, par famille, l'arrangement des matériaux de la bandes frottantes selon l'invention fabriquées pour ces essais comparatifs.

Le matériau A1 correspond à un composite C/C de très haute conductivité thermique (à savoir plus de 300 W/m.K). Le matériau A2 correspond à un électrographite de conductivité thermique inférieure à 100 W/m.K. La version A3 correspond à un électrographite de conductivité thermique typiquement comprise entre 110 et 120 W/m.K.

L'imprégnation de cuivre a été réalisée suivant le même procédé pour toutes les bandes mises à l'essai, à savoir : un chauffage des bandes d'usure sous vide jusqu'à une température de 1 200 °C, suivi d'une immersion dans un bain de cuivre liquide (sous une pression de 140 bars appliquée sur la surface du bain d'imprégnation), puis le retrait des bandes du bain et le refroidissement des bandes sous une pression d'azote de 100 bars.

**Tableau I**

| Famille | Type de matériau graphite utilisé pour la gaine | | | Nombre d'inserts (carbone partiellement amorphe) | | |
|---|---|---|---|---|---|---|
| | A1 | A2 | A3 | 0 | 1 | 2 |
| A | x | | | x | | |
| B | x | | | | x | |
| C | x | | | | | x |
| D | | x | | | x | |
| E | | | x | | x | |

La surface de contact (24, 24a, 24b) totale des inserts était de 47 % de la surface de contact (20) totale de la bande frottante.

Les bandes selon l'invention ont été soumises à des essais dans les conditions suivantes : tests sur le terrain / wagon d'essai (train d'essais SNCF). Le tableau II donne des résultats obtenus pour les bandes selon l'invention mises à l'essai et les compare à la valeur typique obtenue pour une bande frottante en carbone partiellement amorphe imprégné cuivre (sans insert) représentative de l'art antérieur et utilisée sur le matériel roulant de plusieurs réseaux ferroviaires européens.

Les essais de captage à l'arrêt (140 A/cm linéaire) ont montré que les bandes selon l'invention (gainage en graphite) s'échauffent nettement moins que les pantographes carbonés de l'art antérieur. Typiquement, la température d'échauffement était de 70°C plutôt que supérieure à 110 °C. La demanderesse attribue cette différence à la haute conductivité thermique des matériaux graphitiques. Les résultats d'usure sont comparable à ceux des bandes de l'art antérieur.

**Tableau II**

| Famille | Usure en mm/1000 km | Température de la caténaire lors du captage à l'arrêt |
|---|---|---|
| A | 97 | 54°C |
| B | 3 | 70°C |
| C | 3,1 | 80°C |
| D | 4 | >110°C |
| E | 4,5 | 105°C |
| Matériau standard | 4 | > 110°C |

On constate que, de manière surprenante, l'ajout d'une gaine contenant du graphite ne conduit pas à une usure plus rapide de la bande. On gagne ainsi en capacité de captage à l'arrêt dans perdre en résistance à l'usure.

### Liste des références numériques

- 1: Bande frottante
- 2: Bande d'usure
- 3: Moyens de détection d'avaries et/ou d'usure
- 4: Support-renfort
- 5, 6: Moyen de raccordement électrique
- 7, 8: Moyen de fixation
- 9: Pantographe
- 12: Moyen de fixation
- 20: Surface de contact
- 21, 21a, 21b: Gaine
- 22, 22a, 22b: Bande de contact
- 23: Interface gaine/bande de contact
- 24, 24a, 24b: Surface de contact de la bande de contact
- 25: Gorge
- 26: Joint métallique
- 30: Conducteur fixe

## Revendications

1. Bande frottante (1) pour la captation de courant électrique comprenant une bande d'usure (2) contenant un matériau carboné et ayant une surface de contact (20) destinée à être mise en contact électrique avec un conducteur fixe (30), et **caractérisée en ce que** la bande d'usure (2) comprend au moins une bande de contact (22, 22a, 22b) contenant un premier matériau carboné apte à résister à l'abrasion, de dureté Shore C2 supérieure ou égale à 80, et une gaine (21, 21a, 21 b) contenant un deuxième matériau carboné de conductivité thermique supérieure ou égale à 80 W/m.K, et **en ce qu'**une partie (24, 24a, 24b) de la surface de la bande de contact (22, 22a, 22b) forme tout ou partie de ladite surface de contact (20).

2. Bande frottante (1) selon la revendication 1, **caractérisée en ce qu'**elle comprend une seule bande de contact (22, 22a, 22b).

3. Bande frottante (1) selon la revendication 1, **caractérisée en ce qu'**elle comprend deux bandes de contact (22, 22a, 22b) sensiblement parallèles.

4. Bande frottante selon l'une quelconque des revendications 1 à 3, caractérisée ce que la largeur Pi de chaque bande de contact (22, 22a, 22b) par rapport à la largeur totale P de la bande d'usure (2) est comprise entre 10 et 95 %, et de préférence comprise 40 et 92 %.

5. Bande frottante selon l'une quelconque des revendications 1 à 3, caractérisée ce que la largeur Pi de chaque bande de contact (22, 22a, 22b) par rapport à la largeur totale P de la bande d'usure (2) est comprise entre 45 et 60 %.

6. Bande frottante selon l'une quelconque des revendications 1 à 5, caractérisée ce que l'épaisseur Ei de chaque bande de contact (22, 22a, 22b) est au moins égale à 60 % de l'épaisseur E de la bande d'usure (2).

7. Bande frottante (1) selon la revendication 1 à 6, caractérisée ce que la résistivité électrique dudit premier matériau carboné est inférieure à environ 100 µΩ.m.

8. Bande frottante selon l'une quelconque des revendications 1 à 7, caractérisée ce que ledit premier matériau carboné contient du noir de carbone, du coke, moins de 30 % en poids de graphite et un liant carbonisé.

9. Bande frottante selon la revendication 8, **caractérisée en ce que** ledit premier matériau carboné est obtenu à partir d'un mélange comprenant entre 10 % et 70 % en poids de noir de carbone, entre 1 % et 50 % en poids de coke, entre 1 % et 30 % en poids de graphite, et entre 10 et 30 % en poids de liant.

10. Bande frottante selon l'une quelconque des revendications 1 à 9, **caractérisée en ce que** le premier matériau carboné a une structure granulaire et **en ce qu'**au moins 80 % en poids des grains dudit premier matériau carboné ont une taille comprise entre 100 µm et 1 000 µm.

11. Bande frottante (1) selon l'une quelconque des revendications 1 à 10, **caractérisée en ce que** ledit deuxième matériau carboné contient un matériau électrographitique.

12. Bande frottante (1) selon l'une quelconque des revendications 1 à 10, **caractérisée en ce que** ledit deuxième matériau carboné contient au moins 10 % en poids de graphite naturel ou artificiel.

13. Bande frottante (1) selon la revendication 12, **caractérisée en ce que** ledit deuxième matériau carboné comprend entre 35 et 99 % en poids de graphite naturel ou artificiel.

14. Bande frottante (1) selon la revendication 12, **caractérisée en ce que** ledit deuxième matériau carboné comprend entre 60 et 99 % en poids de graphite naturel ou artificiel.

15. Bande frottante (1) selon l'une quelconque des revendications 11 à 14, **caractérisée en ce que** le deuxième matériau carboné a une structure granulaire et **en ce qu'**au moins 90 %, et de préférence 95 %, en poids des grains dudit deuxième matériau carboné ont une taille inférieure à 100 µm.

16. Bande frottante (1) selon l'une quelconque des revendications 11 à 14, **caractérisée en ce que** le deuxième matériau carboné a une structure granulaire et **en ce qu'**au moins 90 %, et de préférence 95 %, en poids des grains dudit deuxième matériau carboné ont une taille inférieure à 50 µm.

17. Bande frottante (1) selon l'une quelconque des revendications 1 à 10, **caractérisée en ce que** ledit deuxième matériau carboné est un composite carbone/carbone graphitisé.

18. Bande frottante (1) selon l'une quelconque des revendications 1 à 17, caractérisée ce que ledit deuxième matériau carboné possède un coefficient d'anisotropie supérieur à 1,1, et de préférence supérieur à 1,2.

19. Bande frottante (1) selon la revendication 18, **caractérisée en ce que** l'orientation de l'anisotropie telle que la conductivité thermique du matériau est la plus élevée dans la direction perpendiculaire à la surface de contact.

20. Bande frottante (1) selon l'une quelconque des revendications 1 à 19, **caractérisée en ce que** la, ou chaque, bande de contact (22, 22a, 22b) est un insert.

21. Bande frottante (1) selon l'une quelconque des revendications 1 à 20, **caractérisée en ce que** les porosités de la bande d'usure (2) sont enduites de produits carbonés.

22. Bande frottante (1) selon l'une quelconque des revendications 1 à 21, **caractérisée en ce que** la ou chaque bande de contact (22, 22a, 22b) contient un métal.

23. Bande frottante (1) selon la revendication 22, **caractérisée en ce que** la part de métal dans la ou chaque bande de contact (22, 22a, 22b) est comprise entre 10 et 50 % en poids de métal.

24. Bande frottante (1) selon l'une quelconque des revendications 1 à 23, **caractérisée en ce que** la gaine (21, 21a, 21b) contient un métal.

25. Bande frottante (1) selon la revendication 24, **caractérisée en ce que** la part de métal dans la gaine (21, 21a, 21b) est comprise entre 10 à 50 % en poids de métal.

26. Bande frottante (1) selon l'une quelconque des revendications 22 à 25, **caractérisée en ce que** ledit métal est choisi dans le groupe comprenant le cuivre, les alliages de cuivre, l'aluminium, les alliages d'aluminium, le magnésium ou les alliages de magnésium.

27. Bande frottante (1) selon l'une quelconque des revendications 1 à 26, **caractérisée en ce que** la bande d'usure (2) comprend des moyens, tels que des éléments de joint métallique (26), pour augmenter les conductivités thermique et électrique à l'interface (23) entre la gaine (21, 21a, 21b) et la, ou chaque, bande de contact (22, 22a, 22b).

28. Bande frottante (1) selon l'une quelconque des revendications 1 à 27, **caractérisée en ce que** la bande d'usure (2) est autoporteuse, c'est-à-dire que la bande frottante (1) ne comprend pas de support-renfort (4).

29. Dispositif de contact frottant comprenant au moins une bande frottante (1) selon l'une quelconque des revendications 1 à 28.

30. Dispositif selon la revendication 29, **caractérisé en ce qu'**il est choisi dans le groupe comprenant les pantographes, les perches de trolley, les frotteurs de troisième rail et les frotteurs industriels.

## Claims

1. A rubbing block (1) for picking up electrical current comprising a wearing block (2) containing a carbon material and having a contact surface (20) intended to be brought into electrical contact with a fixed conductor (30), and **characterized in that** the wearing block (2) comprises at least one contact block (22, 22a, 22b) containing a first carbon material capable of resisting abrasion, with a Shore C2 hardness of 80 or higher, and a sheath (21, 21a, 21b) containing a second carbon material with a thermal conductivity of 80 W/m.K or higher, and **in that** part (24, 24a, 24b) of the surface of the contact block (22, 22a, 22b) forms all or part of the said contact surface (20).

2. The rubbing block (1) according to Claim 1, **characterized in that** it comprises a single contact block (22, 22a, 22b).

3. The rubbing block (1) according to Claim 1, **characterized in that** it comprises two substantially parallel contact blocks (22, 22a, 22b).

4. The rubbing block according to any one of Claims 1 to 3, **characterized in that** the width Pi of each contact block (22, 22a, 22b) with respect to the total width P of the wearing block (2) is between 10 and 95% and preferably between 40 and 92%.

5. The rubbing block according to any one of Claims 1 to 3, **characterized in that** the width Pi of each contact block (22, 22a, 22b) with respect to the total width P of the wearing block (2) is between 45 and 60%.

6. The rubbing block according to any one of Claims 1 to 5, **characterized in that** the thickness Ei of each contact block (22, 22a, 22b) is at least equal to 60% of the thickness E of the wearing block (2).

7. The rubbing block (1) according to Claim 1 to 6, **characterized in that** the electrical resistivity of the said first carbon material is below around 100 µΩ.m

8. The rubbing block (1) according to any one of Claims 1 to 7, **characterized in that** the said first carbon material contains carbon black, coke, under 30 wt% graphite and a carbon binder.

9. The rubbing block according to Claim 8, **characterized in that** the said first carbon material is obtained from a mixture containing between 10 wt% and 70 wit% carbon black, between 1 wt% and 50 wt% coke, between 1 wt% and 30 wt% graphite, and between 10 wt% and 30 wt% binder.

10. The rubbing block according to any one of Claims 1 to 9, **characterized in that** the first carbon material has a granular structure and **in that** at least 80 wt% of the grains of said first carbon material have a size of between 100 µm and 1000 µm.

11. The rubbing block (1) according to any one of Claims 1 to 10, **characterized in that** said second carbon material contains an electrographite material.

12. The rubbing block (1) according to any one of Claims 1 to 10, **characterized in that** said second carbon material contains at least 10 wit% natural or artificial graphite.

13. The rubbing block (1) according to Claim 12, **characterized in that** said second carbon material contains between 35 and 99 wt% natural or artificial graphite.

14. The rubbing block (1) according to Claim 12, **characterized in that** said second carbon material contains between 60 and 99 wt% natural or artificial graphite.

15. The rubbing block (1) according to any one of Claims 11 to 14, **characterized in that** the second carbon material has a granular structure and **in that** at least 90 wt%, and preferably 95 wt% of the grains of said second carbon material have a size smaller than 100 µm.

16. The rubbing block (1) according to any one of Claims 11 to 14, **characterized in that** the second carbon material has a granular structure and **in that** at least 90 wt%, and preferably 95 wt% of the grains of said second carbon material have a size smaller than 50 µm.

17. The rubbing block (1) according to any one of Claims 1 to 10, **characterized in that** said second carbon material is a carbon/graphitised carbon composite.

18. The rubbing block (1) according to any one of Claims 1 to 17, **characterized in that** said second carbon material has an anisotropy coefficient higher than 1.1, and preferably higher than 1.2.

19. The rubbing block (1) according to Claim 18, **characterized in that** the orientation of the anisotropy is such that the thermal conductivity of the material is highest in the direction perpendicular to the contact surface.

20. The rubbing block (1) according to any one of Claims 1 to 19, **characterized in that** the or each contact block (22, 22a, 22b) is an insert.

21. The rubbing block (1) according to any one of Claims 1 to 20, **characterized in that** the porosities of the wearing block (2) are coated with carbon products.

22. The rubbing block (1) according to any one of Claims 1 to 21, **characterized in that** the or each contact block (22, 22a, 22b) contains a metal.

23. The rubbing block (1) according to Claim 22, **characterized in that** the proportion of metal in the or each contact block (22, 22a, 22b) is between 10 and 50 wt% metal.

24. The rubbing block (1) according to any one of Claims 1 to 23, **characterized in that** the sheath (21, 21a, 21b) contains a metal.

25. The rubbing block (1) according to Claim 24, **characterized in that** the proportion of metal in the sheath (21, 21a, 21b) is between 10 and 50 wt% metal.

26. The rubbing block (1) according to any one of Claims 22 to 25, **characterized in that** said metal is chosen from the group containing copper, copper alloys, aluminium, aluminium alloys, magnesium or magnesium alloys.

27. The rubbing block (1) according to any one of Claims 1 to 26, **characterized in that** the wearing block (2) contains means, such as metallic joint elements (26), to increase the thermal and electrical conductivities at the interface (23) between the sheath (21, 21a, 21b) and the or each contact block (22, 22a, 22b).

28. The rubbing block (1) according to any one of Claims 1 to 27, **characterized in that** the wearing block (2) is self-supporting, which means to say that the wiper block (1) has no reinforcing support (4).

29. Sliding contact device comprising at least one rubbing block (1) according to any one of Claims 1 to 28.

30. Device according to Claim 29, **characterized in that** it is chosen from the group comprising pantographs, trolley poles, third-rail collector shoes and industrial wipers.

## Patentansprüche

1. Schleifleiste (1) für die Abnahme elektrischen Stroms mit einer Abnutzungsleiste (2), die ein Kohlenstoffmaterial enthält und eine Kontaktoberfläche (20) aufweist, die dazu bestimmt ist, in elektrischen Kontakt mit einem festen Leiter (30) gebracht zu werden,
**dadurch gekennzeichnet, dass** die Abnutzungsleiste (2) enthält:
zumindest eine Kontaktleiste (22, 22a, 22b), die ein erstes Kohlenstoffmaterial enthält und geeignet ist, dem Abrieb zu widerstehen, mit einer Shore-Härte C2 von größer gleich 80, und
einem Mantel (21, 21a, 21b), der ein zweites Kohlenstoffmaterial mit einer Wärmeleitfähigkeit von größer gleich 80 W/m*K enthält,
wobei ein Abschnitt (24, 24a, 24b) der Oberfläche der Kontaktleiste (22, 22a, 22b) die gesamte oder einen Teil der Kontaktoberfläche (20) bildet.

2. Schleifleiste (1) gemäß Anspruch 1, **dadurch gekennzeichnet, dass** sie eine einzige Kontaktleiste (22, 22a, 22b) enthält.

3. Schleifleiste (1) gemäß Anspruch 1, **dadurch gekennzeichnet, dass** sie zwei im Wesentlichen parallele Kontaktleisten (22, 22a, 22b) enthält.

4. Schleifleiste gemäß einem der Ansprüche 1 bis 3, **dadurch gekennzeichnet, dass** die Breite Pi jeder Kontaktleiste (22, 22a, 22b) mit Bezug auf die Gesamtbreite P der Abnutzungsleiste (2) zwischen 10 und 95% liegt und vorzugsweise zwischen 40 und 92%.

5. Schleifleiste gemäß einem der Ansprüche 1 bis 3, **dadurch gekennzeichnet, dass** die Breite Pi jeder Kontaktleiste (22, 22a, 22b) mit Bezug auf die Gesamtbreite P der Abnutzungsleiste (2) zwischen 45 und 60% liegt.

6. Schleifleiste gemäß einem der Ansprüche 1 bis 5, **dadurch gekennzeichnet, dass** die Dicke Ei jeder Kontaktleiste (22, 22a, 22b) zumindest 60% der Gesamtdicke E der Abnutzungsleiste (2) beträgt.

7. Schleifleiste (1) gemäß einem der Ansprüche 1 bis 6, **dadurch gekennzeichnet, dass** der spezifische elektrische Widerstand des ersten Kohlenstoffmaterials unter etwa 100 µΩ*m liegt.

8. Schleifleiste gemäß einem der Ansprüche 1 bis 7, **dadurch gekennzeichnet, dass** das erste Kohlenstoffmaterial Kienruß, Koks, weniger als 30 Gewichts-% Graphit und ein karbonisiertes Bindemittel enthält.

9. Schleifleiste gemäß Anspruch 8, **dadurch gekennzeichnet, dass** das erste Kohlenstoffmaterial aus einer Mischung gewonnen wird, die zwischen 10 und 70 Gewichts-% Kienruß, zwischen 1 und 50 Gewichts-% Koks, zwischen 1 und 30 Gewichts-% Graphit und zwischen 10 und 30 Gewichts Bindemittel enthält.

10. Schleifleiste gemäß einem der Ansprüche 1 bis 9, **dadurch gekennzeichnet, dass**
das erste Kohlenstoffmaterial eine körnige Struktur aufweist und
mindestens 30 Gewichts-% der Körner des ersten Kohlenstoffmaterials eine Größe haben, die zwischen 100 µm und 1.000 µm liegt.

11. Schleifleiste (1) gemäß einem der Ansprüche 1 bis 10, **dadurch gekennzeichnet, dass** das zweite Kohlenstoffmaterial ein elektrographitisches Material enthält.

12. Schleifleiste (1) gemäß einem der Ansprüche 1 bis 10, **dadurch gekennzeichnet, dass** das zweite Kohlenstoffmaterial mindestens 10 Gewichts-% natürlichen oder künstlichen Graphits enthält.

13. Schleifleiste (1) gemäß Anspruch 12, **dadurch gekennzeichnet, dass** das zweite Kohlenstoffmaterial zwischen 35 und 99 Gewichts-% natürlichen oder künstlichen Graphits enthält.

14. Schleifleiste (1) gemäß Anspruch 12, **dadurch gekennzeichnet, dass** das zweite Kohlenstoffmaterial zwischen 60 und 99 Gewichts-% natürlichen oder künstlichen Graphits enthält.

15. Schleifleiste (1) gemäß einem der Ansprüche 11 bis 14, **dadurch gekennzeichnet, dass**
das zweite Kohlenstoffmaterial eine körnige Struktur aufweist und
mindestens 90, vorzugsweise 95 Gewichts-% der Körner des zweiten Kohlenstoffmaterials eine Größe haben, die unter 100 µm liegt.

16. Schleifleiste (1) gemäß einem der Ansprüche 11 bis 14, **dadurch gekennzeichnet, dass**
das zweite Kohlenstoffmaterial eine körnige Struktur aufweist und
mindestens 90, vorzugsweise 95 Gewichts-% der Körner des zweiten Kohlenstoffmaterials eine Größe haben, die unter 50 µm liegt.

17. Schleifleiste (1) gemäß einem der Ansprüche 1 bis 10, **dadurch gekennzeichnet, dass** das zweite Kohlenstoffmaterial ein Verbund Kohlenstoff / graphitisierter Kohlenstoff ist.

18. Schleifleiste (1) gemäß einem der Ansprüche 1 bis 17, **dadurch gekennzeichnet, dass** das zweite Kohlenstoffmaterial einen Anisotropiekoeffizienten von mehr als 1,1 aufweist, vorzugsweise mehr als 1,2.

19. Schleifleiste (1) gemäß Anspruch 18, **dadurch gekennzeichnet, dass** die Orientierung der Anisotropie wie der thermischen Leitfähigkeit des Materials in der Richtung senkrecht zu der Kontaktoberfläche am größten ist.

20. Schleifleiste (1) gemäß einem der Ansprüche 1 bis 19, **dadurch gekennzeichnet, dass** die Kontaktleiste oder alle Kontaktleisten (22, 22a, 22b) ein Einsatz sind.

21. Schleifleiste (1) gemäß einem der Ansprüche 1 bis 20, **dadurch gekennzeichnet, dass** die Porositäten der Abnutzungsleiste (2) mit Kohlenstoffprodukten überzogen sind.

22. Schleifleiste (1) gemäß einem der Ansprüche 1 bis 21, **dadurch gekennzeichnet, dass** die Kontaktleiste oder alle Kontaktleisten (22, 22a, 22b) ein Metall enthalten.

23. Schleifleiste (1) gemäß Anspruch 22, **dadurch gekennzeichnet, dass** der Metallanteil in der oder jeder Kontaktleiste (22, 22a, 22b) zwischen 10 und 50 Gewichts-% Metall liegt.

24. Schleifleiste (1) gemäß einem der Ansprüche 1 bis 23, **dadurch gekennzeichnet, dass** der Mantel (21, 21a, 21b) ein Metall enthält.

25. Schleifleiste (1) gemäß Anspruch 24, **dadurch gekennzeichnet, dass** der Metallanteil in dem Mantel (21, 21a, 21b) zwischen 10 und 50 Gewichts-% Metall liegt.

26. Schleifleiste (1) gemäß einem der Ansprüche 22 bis 25, **dadurch gekennzeichnet, dass** das Metall aus der Gruppe gewählt ist, die Kupfer, Kupferlegierungen, Aluminium, Aluminiumlegierungen, Magnesium oder Magnesiumlegierungen enthält.

27. Schleifleiste (1) gemäß einem der Ansprüche 1 bis 26, **dadurch gekennzeichnet, dass** die Abnutzungsleiste (2) Mittel enthält wie z.B. metallische Verbindungselemente (26), um die thermische und elektrische Leitfähigkeit an der Grenzfläche (23) zwischen dem Mantel (21, 21a, 21b) und der oder jeder Kontaktleiste (22, 22a, 22b) zu erhöhen.

28. Schleifleiste (1) gemäß einem der Ansprüche 1 bis 27, **dadurch gekennzeichnet, dass** die Abnutzungsleiste (2) selbsttragend ist, d.h. dass die Schleifleiste (1) keine Verstärkungshalterung (4) enthält.

29. Schleifkontaktvorrichtung, die zumindest eine Schleifleiste (1) gemäß einem der Ansprüche 1 bis 28 enthält.

30. Schleifkontaktvorrichtung gemäß Anspruch 29, **dadurch gekennzeichnet, dass** sie gewählt ist aus der Gruppe, die Pantographen, Trolley-Stromabnehmer, Stromschienen-Schleifschuhe und industrielle Schleifschuhe enthält.
